# FASCICULE DE BREVET EUROPEEN

(11) **EP 2 462 038 B1**
(45) Date de publication et mention de la délivrance du brevet: **26.06.2013**
(21) Numéro de dépôt: 10736711.2
(22) Date de dépôt: 23.07.2010
(51) Int. Cl.: B65G 17/24, B29D 30/00

(54) **TRANSITIQUE ADAPTEE AU TRANSFERT ET AU STOCKAGE DES CARCASSES DE PNEUMATIQUES**
ARBEITSABLAUF ZUR ÜBERTRAGUNG UND LAGERUNG VON KARKASSEN
WORKFLOWS FOR TRANSFERRING AND STORING TIRE CASINGS

(30) Priorité: 06.08.2009 FR 0955523
(43) Date de publication de la demande: 13.06.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: SABATHE, Guy, F-63830 Nohanent (FR); MARTI, Francis, F-63118 Cebazat (FR)
(74) Mandataire: Reynaud, Georges
(86) Numéro de dépôt international: PCT/EP2010/060735
(87) Numéro de publication internationale: WO 2011/015471

(56) Documents cités:
- EP-A2- 0 659 542
- US-A- 4 686 895

## Description

L'invention concerne le domaine de la fabrication des pneumatiques, et en particulier celui de la transitique utilisée pour le transfert et le stockage des carcasses de pneumatiques au sein des ateliers de fabrication.

Selon certains procédés d'assemblage, la fabrication des pneumatiques se décompose en deux étapes distinctes. Au cours d'une première étape on assemble sur un tambour, généralement cylindrique, les composants comprenant la nappe de renfort carcasse et les anneaux de renfort des talons pour obtenir un ensemble sensiblement cylindrique, souvent dénommé sous l'appellation de carcasse par extension du nom d'un de ses composants principaux.

Dans une seconde étape, on confère à la carcasse une forme sensiblement toroïdale, et on dépose les composants formant la ceinture de renfort sommet, comprenant notamment les nappes de renfort sommet et la bande de roulement.

Ces deux opérations s'effectuant sur des machines d'assemblage distinctes, il a été nécessaire de développer des moyens de transfert permettant de stocker et de déplacer les carcasses depuis la machine d'assemblage de la carcasse jusqu'à la machine d'assemblage du sommet.

Ces moyens divers comprennent, entre autre, des convoyeurs à rouleau sur lesquels, du type de celui décrit dans la publication EP 659 542, les carcasses sont déposées et stockées en attente de leur reprise par la machine d'assemblage du sommet. Ce document décrit un dispositif selon le preambule de la revendication 1.

En règle générale, et pour éviter les déformations liées à la faible rigidité de la nappe de renfort carcasse, les carcasses sont disposées sur lesdits convoyeurs de sorte que leur axe soit placé horizontalement, et perpendiculairement au sens de progression de la carcasse sur le convoyeur à rouleau. Les carcasses reposent donc directement sur une de leur génératrice.

Toutefois, lorsqu'elles sont placées dans cette position, les carcasses subissent des déformations liées en premier lieu aux effets de la pesanteur.

Une solution connue, telle que décrite dans la publication WO 02/1822, consiste donc à mettre lesdites carcasses en rotation autour de leur axe de révolution de sorte que les effets de la pesanteur s'exercent de manière équivalente sur l'ensemble des points de la circonférence de la carcasse.

A cet effet, les rouleaux du convoyeur sont animés en rotation autour de leur axe de rotation et sont mobiles en translation dans la direction de progression des carcasses, laquelle direction est perpendiculaire audit axe de rotation des rouleaux. Ces deux mouvements de mise en rotation et de translation des rouleaux peuvent être commandés indépendamment l'un de l'autre.

On observe toutefois que, au cours de la mise en rotation des carcasses sur le convoyeur à rouleau, les carcasses dévient de leur trajectoire dans une direction axiale (perpendiculaire à la direction de progression) en raison des faibles variations géométriques affectant leur forme généralement cylindrique. Il en résulte alors un contact non désiré des carcasses avec un des bords du convoyeur ou des carcasses entre elles lorsqu'elles sont disposées de front sur un convoyeur de grande largeur. Ces contacts sont susceptibles de provoquer des déformations des élastomères non vulcanisés formant la carcasse du pneumatique en cours de fabrication.

De manière plus générale, le problème tel qu'exposé ci-dessus se pose également pour tout dispositif comprenant au moins une paire de rouleaux destinés à supporter une carcasse de pneumatique, et dans lequel lesdits rouleaux sont mis en rotation, de sorte que la carcasse tourne sur son axe afin de ne pas subir les déformations liées à l'action de la pesanteur.

L'invention a pour objet de proposer une solution à ce problème.

Le dispositif selon l'invention est du type comportant au moins une paire de rouleaux dont les axes sont parallèles entre eux et disposés à une distance adaptée de sorte à pouvoir supporter la carcasse de forme sensiblement cylindrique d'un pneumatique en cours de fabrication. Lesdits rouleaux sont montés sur un châssis et sont animés en rotation dans un même sens autour de leurs axes respectifs. Ce dispositif se caractérise en ce que au moins un des rouleaux de ladite paire a un profil radial de forme généralement sinusoïdale comportant une succession de crêtes et de creux et l'autre rouleau a un profil généralement cylindrique.

Les anneaux de renfort talon situés aux deux extrémités axiales de la carcasse se positionnent préférentiellement dans les creux des rouleaux, évitant de la sorte tout mouvement axial de la carcasse sur le dispositif.

Les figures décrivent un mode de réalisation avec une paire de rouleaux sinusoïdaux ne faisant pas partie de l'invention :
- la figure 1 représente une vue de dessus d'un dispositif selon l'invention,
- la figure 2 représente une vue en coupe (selon FF) du dispositif selon la figure 1,
- la figure 3 représente une vue de face du dispositif selon la figure 1,
- la figure 4 représente une vue de dessus d'un convoyeur formé de paires de rouleaux selon le dispositif de l'invention.

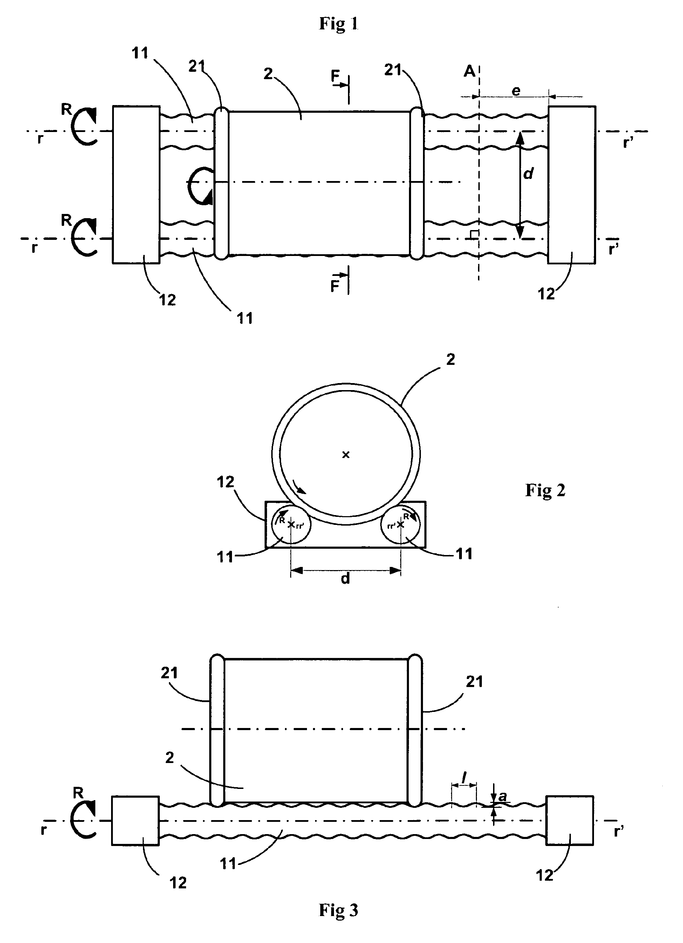

Le dispositif représenté dans les figures 1 à 3 comprend une paire de rouleaux 11 montés sur un châssis 12. Les rouleaux sont montés sur le châssis 12 de sorte que les axes rr' desdits rouleaux soient parallèles entre eux et disposés à une distance d, adaptée de sorte à pouvoir supporter la carcasse 2 d'un pneumatique en cours de fabrication.

Chacun des rouleaux est animé en rotation autour de son axe selon un même sens de rotation R. De manière alternative, il est également possible de ne motoriser qu'un des deux rouleaux de la paire, l'autre rouleau étant entraîné en rotation par le mouvement de la carcasse.

Les moyens de mise en rotation et de translation des rouleaux sont composés d'un ensemble de pignons et de chaînes de transmission de conception classique.

Le profil radial d'au moins un des rouleaux de la paire, compris comme étant le profil de l'intersection de la forme extérieure du rouleau avec un plan quelconque passant par l'axe rr' dudit rouleau, a une forme généralement sinusoïdale ou encore ondulée comprenant des crêtes et des creux.

Dans ce mode de réalisation ne faisant pas partie de l'invention, les deux rouleaux de la paire ont un profil radial de forme généralement sinusoïdale identique, les rouleaux étant montés sur le châssis 12 de sorte que les creux (ou les crêtes) situés à une même distance e d'un bord du châssis forment un alignement AA' perpendiculaire aux axes des rouleaux.

La figure 3 illustre une vue de face du dispositif de la figure 1. La distance l entre deux crêtes consécutives (ou entre deux creux consécutifs) peut utilement être comprise entre 25 mm et 50 mm.

De même, la profondeur ou l'amplitude a entre une crête et un creux peut utilement être comprise entre 5 mm et 10 mm.

Ces valeurs sont données à titre indicatif, et sont adaptées à la taille des carcasses que l'on désire transférer, et correspondent dans le cas présent aux valeurs ayant donné de bons résultats pour des carcasses de pneumatiques de dimensions courantes destinées à l'équipement des véhicules de tourisme ou de poids lourds.

On observe sur la figure 3 que les anneaux de renfort talon 21 viennent naturellement se positionner dans les creux des rouleaux qui font alors office de rail pour priver la carcasse de tout mouvement axial parasite.

Le choix des valeurs de *l* et a peut être relativement standard selon la catégorie de carcasse de pneumatiques en cours de fabrication. En effet, il suffit qu'un seul des deux anneaux de renfort talon de la carcasse soit profilé selon les indications faisant l'objet de la présente invention, pour assurer un maintien satisfaisant de ladite carcasse sur le dispositif.

Le diamètre des rouleaux correspond aux diamètres standard utilisés pour ce type de transitique et peut utilement être compris entre 50 mm et 70 mm.

La réalisation des rouleaux du type selon l'invention peut se faire aisément en glissant une chemise de profil sinusoïdal sur un rouleau standard du commerce.

La distance d entre les axes rr' des rouleaux dépend également du diamètre des carcasses, mais on observe qu'en choisissant une valeur de d comprise entre 15 cm et 40 cm, le dispositif peut être valablement utilisé pour des carcasses ayant un diamètre compris entre 13" et 21", et correspondant aux gammes de pneumatiques destinés à équiper les véhicules de tourisme. A titre d'exemple un écartement d de 35 cm convient pour des carcasses de pneumatiques de 17". Pour les carcasses de pneumatiques de poids lourds d'un diamètre supérieur il est possible de porter cette distance jusqu'à une valeur de 50 cm voire 55 cm pour les très gros poids lourds pour lesquels on arrive en limite d'usage de ce type de moyen de transfert en raison du poids important de ces carcasses.

Le dispositif simplifié faisant l'objet de la présente description peut faire l'objet de plusieurs variantes d'exécution

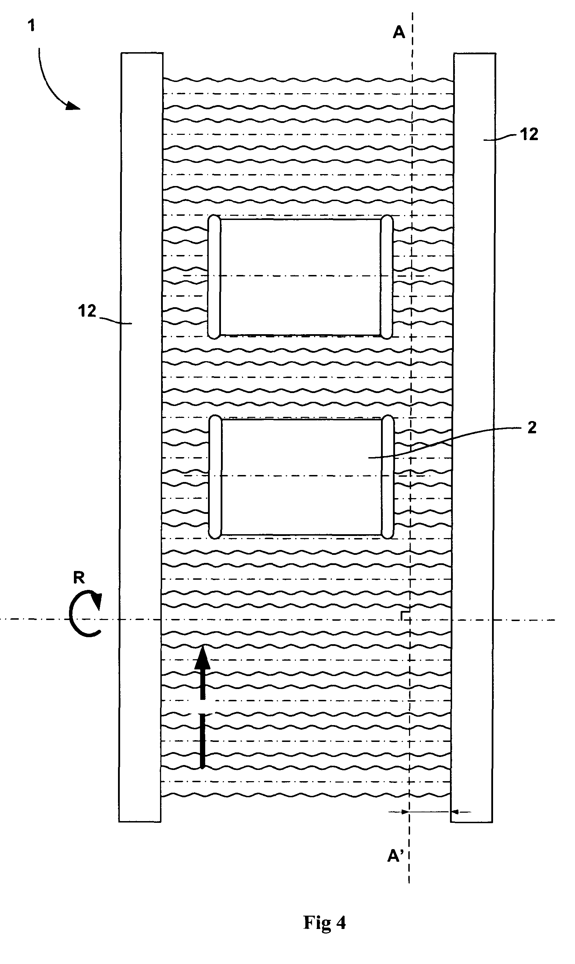

La figure 4 représente un convoyeur de stockage formé d'une pluralité de paires de rouleaux tels que décrits ci-dessus. Les axes de deux rouleaux consécutifs quelconques sont distants d'un espace *d*. Les rouleaux sont animés d'un mouvement de translation dans une direction P, perpendiculaire aux axes rr' desdits rouleaux et qui correspond à la direction de progression des carcasses de pneumatique sur ledit convoyeur.

En règle générale les axes des rouleaux sont disposés dans un même plan.

L'homme du métier pourra aisément combiner les enseignements issus de la présente description et disposer les paires de rouleaux de sorte que les carcasses puissent tout à la fois être mises en rotation d'une part, et avoir d'autre part un rouleau à profil sinusoïdal en contact avec les bourrelets de manière à éviter tout déplacement axial de la carcasse sur ledit convoyeur.

Ce type de convoyeur peut également être aménagé de sorte à recevoir plusieurs carcasses de front. Il suffit pour cela d'augmenter la longueur des rouleaux. Le dispositif selon l'invention s'avère alors particulièrement intéressant en ce qu'il empêche les carcasses disposées sur un même rang de venir en contact axialement les unes contre les autres.

De même, il est possible d'envisager un système à grande capacité de stockage dans lequel plusieurs convoyeurs du type sont disposés verticalement les uns au dessus des autres.

## Revendications

1. Dispositif de stockage ou de manutention, comportant au moins une paire de rouleaux (11) dont les axes (rr') sont parallèles entre eux et sont disposés à une distance adaptée (d) de sorte à pouvoir supporter une carcasse (2) de forme sensiblement cylindrique d'un pneumatique en cours de fabrication, dans lequel lesdits rouleaux (11) sont montés sur un châssis (12), et sont animés en rotation dans un même sens (R) autour de leurs axes (rr') respectifs, **caractérisé en ce qu'**un des rouleaux (11) de ladite paire a un profil radial de forme généralement sinusoïdale comportant une succession de crêtes et de creux et l'autre rouleau de ladite paire a un profil généralement cylindrique.

2. Dispositif selon la revendication 1, dans lesquels la longueur (*l*) entre deux crêtes consécutives est comprise entre 25 mm et 50 mm.

3. Dispositif selon la revendication 1 ou 2 dans lequel l'amplitude (*a*) entre une crête et un creux est comprise entre 5 et 10 mm.

4. Dispositif selon l'une des revendications 1 à 3, dans lequel seul un des rouleaux de la paire est animé en rotation par un moyen d'entraînement motorisé, et dans lequel l'autre rouleau de la paire est libre et tourne autour de son axe sous l'effet de la rotation de la carcasse.

5. Dispositif selon l'une des revendications 1 à 4, comprenant une pluralité de paires de rouleaux disposées de sorte que les axes de deux rouleaux consécutifs quelconques soient parallèles entre eux et distants d'un espace (*d*), et dans lequel les rouleaux sont animés d'un mouvement de translation dans une direction P perpendiculaire aux axes (rr') des rouleaux, de manière à former un convoyeur dont le sens de progression correspond à la direction P.

6. Dispositif selon la revendication 5, dans lequel les axes des rouleaux (11) sont sensiblement coplanaires.

## Patentansprüche

1. Lager- oder Beförderungsvorrichtung, die mindestens ein Paar von Rollen (11) aufweist, deren Achsen (rr') parallel und in einem geeigneten Abstand (d) zueinander angeordnet sind, um eine Karkasse (2) von im Wesentlichen zylindrischer Form eines in Herstellung befindlichen Luftreifens zu tragen, wobei die Rollen (11) auf ein Gestell (12) montiert sind und in der gleichen Richtung (R) um ihre Achsen (rr') in Drehung versetzt werden, **dadurch gekennzeichnet, dass** eine der Rollen (11) des Paars ein allgemein sinusförmiges radiales Profil hat, das eine Folge von Spitzen und Vertiefungen aufweist, und die andere Rolle des Paars ein allgemein zylindrisches Profil hat.

2. Vorrichtung nach Anspruch 1, wobei die Länge (1) zwischen zwei aufeinanderfolgenden Spitzen zwischen 25 mm und 50 mm liegt.

3. Vorrichtung nach Anspruch 1 oder 2, wobei die Amplitude (a) zwischen einer Spitze und einer Vertiefung zwischen 5 und 10 mm liegt.

4. Vorrichtung nach einem der Ansprüche 1 bis 3, wobei nur eine der Rollen des Paars von einer motorisierten Antriebseinrichtung in Drehung versetzt wird, und wobei die andere Rolle des Paars frei ist und unter der Wirkung der Drehung der Karkasse um ihre Achse dreht.

5. Vorrichtung nach einem der Ansprüche 1 bis 4, die eine Vielzahl von Rollenpaaren enthält, die so angeordnet sind, dass die Achsen von zwei beliebigen aufeinanderfolgenden Rollen parallel zueinander sind und einen Abstand (d) zueinander haben, und bei der die Rollen in einer Richtung P lotrecht zu den Achsen (rr') der Rollen in eine Translationsbewegung versetzt werden, um ein Förderband zu formen, dessen Vorschubrichtung der Richtung P entspricht.

6. Vorrichtung nach Anspruch 5, wobei die Achsen der Rollen (11) im Wesentlichen koplanar sind.

## Claims

1. Storage or handling device comprising at least one pair of rollers (11), the axes (rr') of which are mutually parallel and are arranged a suitable distance (d) apart such that they can support a carcass (2) of substantially cylindrical shape of a tyre that is in the process of being manufactured, in which device the said rollers (11) are mounted on a chassis (12) and are driven in rotation in the same direction (R) about their respective axes (rr'), **characterized in that** one of the rollers (11) of the said pair has a radial profile of sinusoidal overall shape comprising a succession of crests and of troughs, and the other roller of the said pair has a cylindrical overall profile.

2. Device according to Claim 1, in which the length (I) between two consecutive crests is between 25 mm and 50 mm.

3. Device according to Claim 1 or 2, in which the amplitude (a) between a crest and a trough is between 5 and 10 mm.

4. Device according to one of Claims 1 to 3, in which just one of the rollers of the pair is driven in rotation by a motorized drive means and in which the other roller of the pair is free and revolves about its axis under the effect of the rotation of the carcass.

5. Device according to one of Claims 1 to 4, comprising a plurality of pairs of rollers arranged in such a way that the axes of any two consecutive rollers are mutually parallel and separated by a space (d), and in which the rollers are driven with a translational movement in a direction P perpendicular to the axes (rr') of the rollers so as to form a conveyor, the direction of travel of which corresponds to the direction P.

6. Device according to Claim 5, in which the axes of the rollers (11) are substantially coplanar.
